# EUROPEAN PATENT SPECIFICATION

(11) **EP 3 482 992 B1**
(45) Date of publication and mention of the grant of the patent: **16.12.2020**
(21) Application number: 18200094.3
(22) Date of filing: 12.10.2018
(51) Int. Cl.: B60K 28/14, F02B 61/02, F02D 41/02, F02D 41/10, B60W 30/04, F02D 29/02

(54) **DRIVING-FORCE CONTROL DEVICE OF TWO-WHEELED AUTOMOBILE**
ANTRIEBSKRAFTSTEUERUNGSVORRICHTUNG EINES ZWEIRÄDRIGEN KRAFTFAHRZEUGS
DISPOSITIF DE COMMANDE DE LA FORCE D'ENTRAÎNEMENT D'UN VÉHICULE AUTOMOBILE À DEUX ROUES

(30) Priority: 10.11.2017 JP 2017217150
(43) Date of publication of application: 15.05.2019
(73) Proprietor: Keihin Corporation, Tokyo 163-0539 (JP)
(72) Inventor: Mizoguchi, Tetsuya, Shioya-gun, Tochigi 329-1233 (JP); Amano, Yoshihiko, Shioya-gun, Tochigi 329-1233 (JP); Akimoto, Yutaka, Shioya-gun, Tochigi 329-1233 (JP)
(74) Representative: v. Bezold & Partner Patentanwälte - PartG mbB

(56) References cited:
- GB-A- 2 500 463
- JP-A- 2017 114 342
- US-A1- 2002 039 951
- US-A1- 2011 160 973

## Description

### BACKGROUND OF THE INVENTION

The present invention relates to a driving-force control device of a vehicle, and more particularly relates to a driving-force control device of a two-wheeled automobile that suppresses lift-up of a two-wheeled automobile whose front wheel tends to be lifted up.

In a two-wheeled automobile, vehicle weight is light with respect to driving torque (for convenience sake, the driving torque may be described as "driving force"), which is actual torque of a driving wheel transmitted from the driving wheel to a road surface by an output of an engine. Therefore, a lift-up (wheelie) posture, in which only a front wheel comes off and becomes away from the road surface in a state in which a rear wheel being the driving wheel is grounded, tends to be taken due to an abrupt opening operation of an accelerator grip, an abrupt connecting operation of a clutch, or the like. For example, when the two-wheeled automobile shifts from a horizontal basic posture to the lift-up posture, if it is assumed that a central axis in a width direction of the front wheel moves clockwise about a grounding point of the rear wheel as viewed from the left side, a rotation angle (a pitch angle) around a reference axis that passes a barycenter of the two-wheeled automobile and is parallel to a right and left direction (a width direction) changes clockwise as viewed from the left side. On the other hand, when the two-wheeled automobile returns from the lift-up posture to the horizontal basic posture, the central axis of the front wheel moves counterclockwise about the grounding point of the rear wheel as viewed from the left side, and the pitch angle changes counterclockwise as viewed from the left side. At this time, the position of the barycenter of the two-wheeled automobile moves according to clockwise or counterclockwise rotation about the grounding point of the rear wheel.

In such a two-wheeled automobile, if the two-wheeled automobile is in an unstable vehicle posture in which the front wheel is excessively lifted up and the automobile stands only on the rear wheel, a possibility of leading to overturning tends to occur. Therefore, it is preferable to control the driving torque generated by the output of the engine so that the front wheel is not excessively lifted up.

Under such circumstances, International Patent Publication No. WO2014/167983 relates to a torque control device and discloses that the device includes a configuration in which if a state having a possibility of lift-up of a front wheel of a two-wheeled automobile is detected, torque smaller than requested torque by a driver is output as the requested torque to an engine of the two-wheeled automobile, or a difference between the requested torque by the driver and the torque smaller than the requested torque by the driver is output as break torque, intending to suppress an occurrence of wheelie of a two-wheeled automobile.

Document JP 2017 114342 A discloses a wheelie controller for controlling a wheelie of a vehicle body. The wheelie controller is configured to compute a target trajectory, which is a target of a parameter, to control a wheelie state of the vehicle body, in accordance with the parameter that is related to pitch of the vehicle body, and to control an increase/reduction of the pitch of the vehicle body so as to bring the parameter close to the target trajectory.

Document GB 2 500 463 A discloses a traction control device which includes a virtual front-wheel-speed calculating unit that calculates a virtual front wheel speed as a front wheel speed after a front wheel has been lifted, by sequentially performing a correction calculation. The front wheel speed, immediately before the front wheel is lifted, is used as an initial value. When a front-wheel lift-state judging unit 21b judges that the front wheel is in the lifted state, a traction-control start determining unit judges a relation between a deviation between the virtual front wheel speed and a rear wheel speed and a predetermined slip rate, and an engine-output control unit controls a drive force of the rear wheel based on the relation between a deviation between the virtual front wheel speed and the rear wheel speed and the predetermined slip rate.

### SUMMARY OF THE INVENTION

However, according to the studies conducted by the present inventors, the configuration disclosed in the International Patent Publication No. WO 2014/167983 intends to suppress an occurrence of wheelie of a two-wheeled automobile. However, if it is tried to suppress an occurrence of wheelie reliably, the requested torque to the engine may become excessively small or the break torque may become excessively large, and it takes time until the two-wheeled automobile is accelerated again after front lift is canceled. There is still a room for improvement in that there is a tendency of affecting the drivability.

According to the studies conducted by the present inventors, if actual driving torque (an actual driving force), which is actual torque of a driving wheel at the time of detecting an occurrence of front lift, is set as reference torque (a reference driving force) at which front lift occurs, in the case where the front lift is canceled by adjusting the actual driving torque to be lower than the reference torque, the reference torque may be set to a small value, because if a driver decreases an opening degree of the accelerator during a delay time after the front lift has occurred until it is detected, the actual driving torque also decreases according to a request of the driver. As a result, it takes time after the front lift has been canceled until the two-wheeled automobile is accelerated again to deteriorate acceleration performance. Therefore, there is still a room for improvement in that the drivability deteriorates.

The present invention has been achieved through the studies described above, and an object of the present invention is to provide a driving-force control device of a two-wheeled automobile that can appropriately suppress lift-up (wheelie) of the two-wheeled automobile, and can improve the acceleration performance by reducing the time required after the front lift has been canceled until the two-wheeled automobile is accelerated again, thereby enabling to improve the drivability of the two-wheeled automobile.

In order to achieve the above object, a first aspect of the present invention is to provide a driving-force control device of a two-wheeled automobile in which a rear wheel is a driving wheel and a front wheel is a driven wheel, the driving-force control device including a control unit that controls a driving force of the driving wheel so that lift-up of the front wheel of the two-wheeled automobile is suppressed, wherein the control unit controls the driving force so that the driving force becomes equal to or smaller than a predetermined driving force calculated when the lift-up is detected, and the predetermined driving force is set to a larger value as speed of rotation of the rear wheel becomes higher.

According to a second aspect of the present invention, in addition to the first aspect, the control unit executes control so that a smaller one of a requested driving force reflecting an opening degree of an accelerator and the predetermined driving force becomes the driving force.

According to a third aspect of the present invention, in addition to the second aspect, when the smaller one is the predetermined driving force, the control unit decreases the predetermined driving force in a stepwise manner so that the driving force becomes the predetermined driving force.

According to a fourth aspect of the present invention, in addition to any one of the first to third aspects, the control unit calculates the predetermined driving force based on the speed of rotation of the rear wheel at a timing when the lift-up is detected.

In the driving-force control device of a two-wheeled automobile according to the first aspect of the present invention, a control unit controls a driving force so that the driving force becomes equal to or smaller than a predetermined driving force calculated when lift-up is detected, and the predetermined driving force is set to a larger value as the speed of rotation of a rear wheel becomes higher. Therefore, lift-up (wheelie) of a two-wheeled automobile can be appropriately suppressed, a time required after the front lift has been canceled until the two-wheeled automobile is accelerated again is reduced to improve acceleration performance, thereby enabling to improve drivability of the two-wheeled automobile.

In the driving-force control device of a two-wheeled automobile according to the second aspect of the present invention, the control unit executes control so that a smaller one of a requested driving force reflecting an opening degree of an accelerator and the predetermined driving force becomes the driving force. Therefore, if the requested driving force is smaller than the predetermined driving force, lift-up can be reliably suppressed by reflecting an intention of a driver who wishes to cancel the lift-up. On the other hand, if the requested driving force is equal to or larger than the predetermined driving force, required vehicle speed can be ensured without increasing the lift-up further, by reflecting an intention of the driver who does not wish to decrease the vehicle speed while controlling the lift-up.

In the driving-force control device of a two-wheeled automobile according to the third aspect of the present invention, when the smaller one is the predetermined driving force, the control unit decreases the driving force in a stepwise manner so that the driving force becomes the predetermined driving force. Therefore, it can be suppressed that the driver has an uncomfortable feeling due to an abrupt change of the driving force.

In the driving-force control device of a two-wheeled automobile according to the fourth aspect of the present invention, the control unit calculates the predetermined driving force based on the speed of rotation of the rear wheel at a timing when the lift-up is detected. Therefore, the predetermined driving force can be acquired as an appropriate value at an appropriate timing and can be effectively used for driving force control.

### BRIEF DESCRIPTION OF THE DRAWINGS

FIG. 1 is a block diagram showing a configuration of a driving-force control device of a two-wheeled automobile according to an embodiment of the present invention;
FIG. 2 is a flowchart showing an example of a flow of front-wheel lift-up time driving-force control processing performed by the driving-force control device of a two-wheeled automobile according to the present embodiment;
FIG. 3A is a time chart showing an example of the front-wheel lift-up time driving-force control processing performed by the driving-force control device of a two-wheeled automobile according to the present embodiment and is a diagram showing an example in which even after lift-up has occurred, a driver does not close the opening degree of an accelerator grip; and
FIG. 3B is a time chart showing an example of the front-wheel lift-up time driving-force control processing performed by the driving-force control device of a two-wheeled automobile according to the present embodiment and is a diagram showing an example in which the driver once closes and then opens again the opening degree of the accelerator grip due to an occurrence of lift-up.

### DETAILED DESCRIPTION OF THE PREFERRED EMBODIMENT

A driving-force control device of a two-wheeled automobile according to an embodiment of the present invention is explained in detail below with reference to the drawings as appropriate.

### [Configuration of driving-force control device]

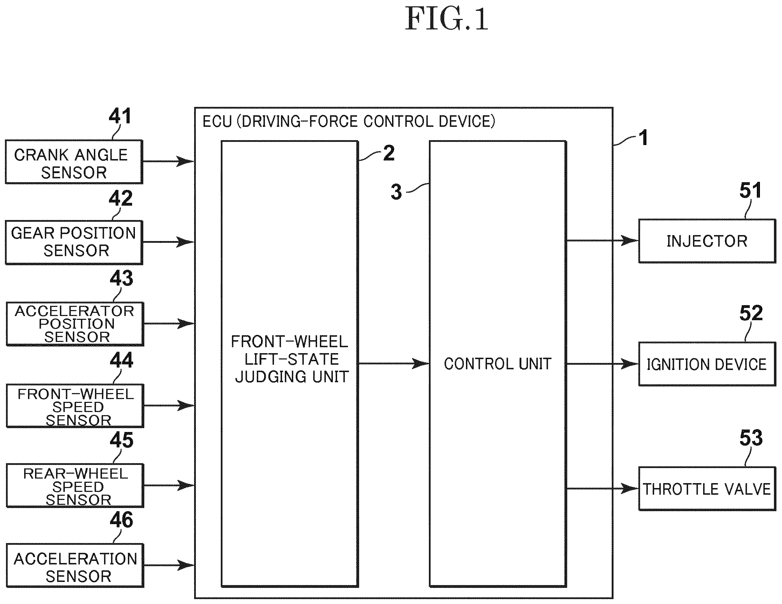

A configuration of a driving-force control device of a two-wheeled automobile according to the present embodiment is described first with reference to FIG. 1.

FIG. 1 is a block diagram showing a configuration of the driving-force control device of a two-wheeled automobile according to the present embodiment.

As shown in FIG. 1, a driving-force control device 1 according to the present embodiment is applied to a two-wheeled automobile, is constituted of an electronic control device such as an ECU (Electronic Control Unit), and is mounted on a two-wheeled automobile in which a rear wheel is a driving wheel and a front wheel is a driven wheel. A crank angle sensor 41 that detects the number of rotations of an engine (an internal combustion engine) of a two-wheeled automobile, a gear position sensor 42 that detects a position of a transmission gear of the two-wheeled automobile, an accelerator position sensor 43 that detects an opening degree of an accelerator grip of the two-wheeled automobile, a front-wheel speed sensor 44 that detects the front wheel speed, which is the speed of rotation of the front wheel of the two-wheeled automobile, and a rear-wheel speed sensor 45 that detects the rear wheel speed, which is the speed of rotation of the rear wheel of the two-wheeled automobile, and an acceleration sensor 46 that detects an acceleration rate of the two-wheeled automobile are electrically connected to the driving-force control device 1. Input circuits such as a waveform forming circuit and an A/D (Analog/Digital) conversion circuit with regard to these various sensors are not shown.

The driving-force control device 1 includes a front-wheel lift-state judging unit 2 and a control unit 3. The front-wheel lift-state judging unit 2 and the control unit 3 are both shown as functional blocks. The driving-force control device 1 also includes a memory (not shown) and reads out and uses various programs and data stored in the memory for arithmetic processing.

The front-wheel lift-state judging unit 2 judges whether the front wheel is in a lift-up state based on a difference between the front wheel speed and the rear wheel speed, the opening degree of the accelerator grip, the position of the transmission gear, and the like. If it is discriminated that the front wheel is in the lift-up state, the front-wheel lift-state judging unit 2 sets a value of a front-wheel lift-up detection flag indicating whether the front wheel is in the lift-up state to 1. If it is discriminated that the front wheel is not in the lift-up state, the front-wheel lift-state judging unit 2 sets the value of the front-wheel lift-up detection flag to 0.

The control unit 3 controls the driving force of the rear wheel, which is a driving wheel, by controlling an injector 51, an ignition device 52, and a throttle valve 53 so as to suppress lift-up of the front wheel, by using a judgement result of the front-wheel lift-state judging unit 2.

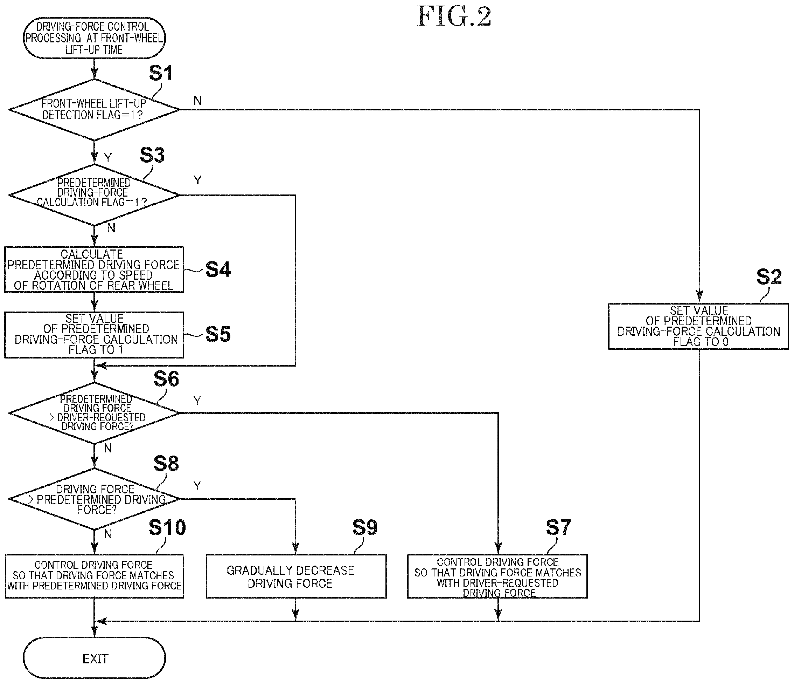

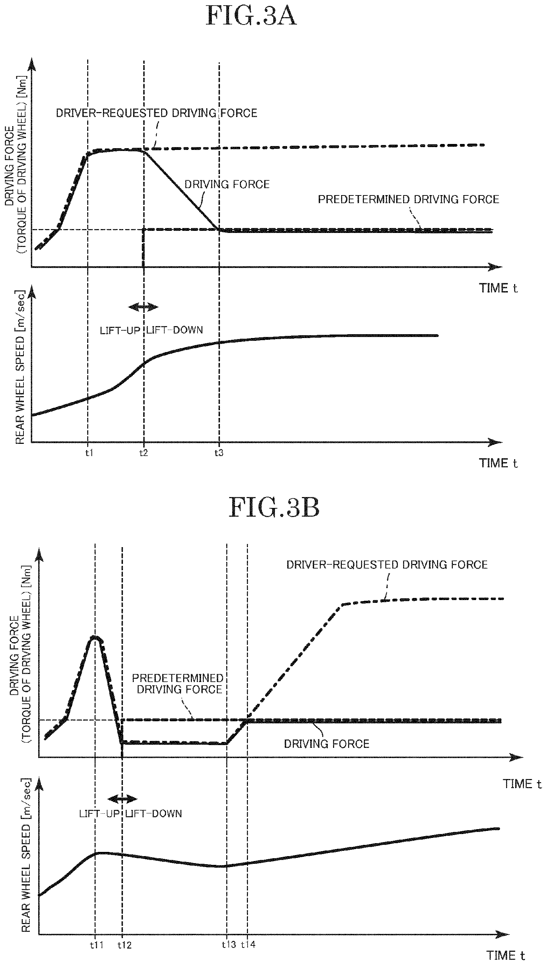

According to the driving-force control device 1 having the configuration described above, the control unit 3 appropriately suppresses lift-up (wheelie) of a two-wheeled automobile by performing front-wheel lift-up time driving-force control processing described below. Further, the control unit 3 reduces the time required after the front lift has been canceled until the two-wheeled automobile is accelerated again to improve the acceleration performance and improve the drivability of the two-wheeled automobile. The operation of the control unit 3 at the time of performing the front-wheel lift-up time driving-force control processing is described in detail also with reference to FIG. 2 and FIG. 3.

### [Front-wheel lift-up time driving-force control processing]

FIG. 2 is a flowchart showing an example of a flow of the front-wheel lift-up time driving-force control processing performed by the driving-force control device of a two-wheeled automobile according to the present embodiment. FIG. 3A and FIG. 3B are time charts indicating an example of the front-wheel lift-up time driving-force control processing performed by the driving-force control device of a two-wheeled automobile according to the present embodiment. FIG. 3A is a diagram showing an example in which even after lift-up has occurred, a driver does not close the opening degree of an accelerator grip, and FIG. 3B is a diagram showing an example in which the driver once closes and then opens again the opening degree of the accelerator grip due to an occurrence of lift-up. In FIG. 3A and FIG. 3B, an upper graph shows a chronological change of the driving force (shown by a dimension of the torque of the driving wheel), and a lower graph shows a chronological change of the rear wheel speed.

The flowchart shown in FIG. 2 is started at a timing when an ignition switch of a two-wheeled automobile is turned on and the driving-force control device 1 is activated, and the front-wheel lift-up time driving-force control processing proceeds to a process at Step S1. The front-wheel lift-up time driving-force control processing is repeatedly performed for every predetermined control cycle while the driving-force control device 1 is being activated.

In the process at Step S1, the control unit 3 discriminates whether the value of the front-wheel lift-up detection flag is 1. As a result of discrimination, if the value of the front-wheel lift-up detection flag is 1 (YES at Step S1), the control unit 3 determines that the front wheel is in the lift-up state and advances the front-wheel lift-up time driving-force control processing to a process at Step S3. On the other hand, if the value of the front- wheel lift-up detection flag is 0 (NO at Step S1), the control unit 3 determines that the front wheel is not in a lift-up state and advances the front-wheel lift-up time driving-force control processing to a process at Step S2.

In the process at Step S2, the control unit 3 sets a value of a predetermined driving-force calculation flag indicating whether the predetermined driving force has been calculated to 0 (the predetermined driving force has not been calculated yet) . Details of the predetermined driving force are described later. Accordingly, the process at Step S2 is complete, and a series of processes of the front-wheel lift-up time driving-force control processing ends.

In the process at Step S3, the control unit 3 discriminates whether the value of the predetermined driving-force calculation flag indicating whether the predetermined driving force has been calculated is 1 (the predetermined driving force has been calculated). As a result of discrimination, if the value of the predetermined driving-force calculation flag is 1 (YES at Step S3), the control unit 3 advances the front-wheel lift-up time driving-force control processing to a process at Step S6. On the other hand, if the value of the predetermined driving-force calculation flag is 0 (the predetermined driving force has not been calculated yet) (NO at Step S3), the control unit 3 advances the front-wheel lift-up time driving-force control processing to a process at Step S4.

In the process at Step S4, the control unit 3 detects the speed of rotation of the rear wheel based on an electric signal corresponding to the rear wheel speed input by the rear-wheel speed sensor 45 to calculate the predetermined driving force according to the speed of rotation of the rear wheel detected in this manner. Specifically, the predetermined driving force is set within a range in which acceleration of the two-wheeled automobile can be maintained while lift-up of the front wheel is suppressed. The control unit 3 sets the predetermined driving force to a larger value as the speed of rotation of the rear wheel becomes higher. The value of the predetermined driving force is digitized beforehand according to the speed of rotation of the rear wheel and stored in the memory. From a viewpoint of suppressing lift-up while ensuring the acceleration performance of the two-wheeled automobile, an increase degree of the predetermined driving force can be gradually decreased as the speed of rotation of the rear wheel becomes higher. Accordingly, the process at Step S4 is complete and the front-wheel lift-up time driving-force control processing proceeds to a process at Step S5.

In the process at Step S5, the control unit 3 sets the value of the predetermined driving-force calculation flag indicating whether the predetermined driving force has been calculated to 1 (the predetermined driving force has been calculated). Accordingly, the process at Step S5 is complete and the front-wheel lift-up time driving-force control processing proceeds to a process at Step S6.

In the process at Step S6, the control unit 3 detects the opening degree of the accelerator grip based on an electric signal corresponding to the opening degree of the accelerator grip of the two-wheeled automobile input by the accelerator position sensor 43 to calculate the driving force requested by a driver (driver-requested driving force) based on the opening degree of the accelerator grip detected in this manner. The control unit 3 then discriminates whether the predetermined driving force is larger than the driver-requested driving force. As a result of discrimination, if the predetermined driving force is larger than the driver-requested driving force (YES at Step S6), the control unit 3 advances the front-wheel lift-up time driving-force control processing to a process at Step S7. On the other hand, if the predetermined driving force is equal to or smaller than the driver-requested driving force (NO at Step S6), the control unit 3 advances the front-wheel lift-up time driving-force control processing to a process at Step S8.

In the process at Step S7, the control unit 3 controls the actual driving force of the rear wheel by controlling the injector 51, the ignition device 52, and the throttle valve 53 so that the driving force of the rear wheel matches with the driver-requested driving force. Accordingly, the process at Step S7 is complete and the series of processes of the front-wheel lift-up time driving-force control processing at this time ends.

In the process at Step S8, the control unit 3 discriminates whether the driving force of the rear wheel is larger than the predetermined driving force. As a result of discrimination, if the driving force of the rear wheel is larger than the predetermined driving force (YES at Step S8), the control unit 3 advances the front-wheel lift-up time driving-force control processing to a process at Step S9. On the other hand, if the driving force of the rear wheel is equal to or smaller than the predetermined driving force (NO at Step S8), the control unit 3 advances the front-wheel lift-up time driving-force control processing to a process at Step S10.

In the process at Step S9, the control unit 3 decreases in a stepwise manner (gradually decreases) the actual driving force of the rear wheel by controlling the injector 51, the ignition device 52, and the throttle valve 53 so that the driving force of the rear wheel becomes the predetermined driving force . Accordingly, the process at Step S9 is complete and the series of processes of the front-wheel lift-up time driving-force control processing at this time ends.

In the process at Step S10, the control unit 3 controls the actual driving force of the rear wheel by controlling the injector 51, the ignition device 52, and the throttle valve 53 so that the driving force of the rear wheel matches with the predetermined driving force. Accordingly, the process at Step S10 is complete and the series of processes of the front-wheel lift-up time driving-force control processing at this time ends.

In an example shown in FIG. 3A, a driver opens the opening degree of the accelerator grip to accelerate until a time t=t1, lift-up has actually occurred at the time t=t1, and the driver does not close the opening degree of the accelerator grip and maintains the opening degree even after the time t=t1. Next at a time t=t2, the front-wheel lift-state judging unit 2 detects a lift-up state of the front wheel. At this time, the control unit 3 calculates the predetermined driving force based on the rear wheel speed. Further, at this time, because the driver-requested driving force is larger than the predetermined driving force, the control unit 3 starts to gradually decrease the driving force of the rear wheel (the actual driving force) so that the driving force of the rear wheel matches with the predetermined driving force. Thereafter, in a period from the time t=t2 to a time t=t3, while the driving force of the rear wheel gradually decreases toward the predetermined driving force, the rear wheel speed does not decrease. At the time t=t3, the driving force of the rear wheel reaches the predetermined driving force, and at and after the time t=t3, the driving force of the rear wheel is maintained at the predetermined driving force, and the rear wheel speed does not decrease.

In an example shown in FIG. 3B, a driver opens the opening degree of the accelerator grip to accelerate until a time t=t11, lift-up has actually occurred at the time t=t11, and then the driver starts to close the opening degree of the accelerator grip. Because the opening degree of the accelerator grip is closed in a period from the time t=t11 to a time t=t12, the driving force and the rear wheel speed decrease. At the time t=t12, the front-wheel lift-state judging unit 2 detects the lift-up state of the front wheel, and at this time, the control unit 3 calculates the predetermined driving force based on the rear wheel speed. Further, at this time, because the driver-requested driving force is smaller than the predetermined driving force, the control unit 3 starts to control the driving force of the rear wheel (the actual driving force) so that the driving force of the rear wheel matches with the driver-requested driving force. Thereafter, in a period from the time t=t12 to a time t=t13, the driving force of the rear wheel is continuously controlled to match with the driver-requested driving force, and the rear wheel speed continues to decrease slightly. At the time t=t13, the opening degree of the accelerator grip starts to be opened again. In a period from the time t=t13 to a time t=t14, because the opening degree of the accelerator grip is being opened, the driving force increases. At the time t=t14, the driving force of the rear wheel reaches the predetermined driving force, and at and after the time t=14, the driving force is maintained at the predetermined driving force, and the rear wheel speed continues to increase slightly.

As is obvious from the above descriptions, according to the driving-force control device 1 of a two-wheeled automobile in the present embodiment, the control unit 3 controls the driving force of a rear wheel so that the driving force of the rear wheel becomes equal to or smaller than the predetermined driving force calculated when lift-up is detected, and the predetermined driving force is set to a larger value as the speed of rotation of the rear wheel becomes higher. Specifically, when the speed of rotation of the rear wheel is low, the control unit 3 controls the driving force of the rear wheel so that the driving force the rear wheel matches with the predetermined driving force by setting the predetermined driving force to a relatively small value, in light of the fact that lift-up of the front wheel tends to occur due to abrupt acceleration from low vehicle speed. Accordingly, lift-up can be suppressed reliably. On the other hand, when the speed of rotation of the rear wheel is high, the control unit 3 controls the driving force of the rear wheel so that the driving force of the rear wheel matches with the predetermined driving force by setting the predetermined driving force to a relatively large value. Accordingly, excellent acceleration performance of a two-wheeled automobile can be ensured. As a result, lift-up (wheelie) of the front wheel can be appropriately suppressed, and the time required after the front lift has been canceled until the two-wheeled automobile is accelerated again is reduced to improve the acceleration performance, thereby enabling to improve the drivability of the two-wheeled automobile.

According to the driving-force control device 1 of a two-wheeled automobile in the present embodiment, the control unit 3 executes control so that a smaller one of the driver-requested driving force reflecting the opening degree of the accelerator and the predetermined driving force becomes the driving force of the rear wheel. Specifically, the control unit 3 compares the driver-requested driving force reflecting the opening degree of an accelerator grip with the predetermined driving force, and when the driver-requested driving force is smaller than the predetermined driving force, the control unit 3 controls the driving force of the rear wheel so that the driving force of the rear wheel matches with the driver-requested driving force. Accordingly, lift-up can be reliably suppressed by reflecting an intention of a driver who wishes to cancel the lift-up. On the other hand, when the driver-requested driving force is equal to or larger than the predetermined driving force, the control unit 3 controls the driving force of the rear wheel so that the driving force of the rear wheel matches with the predetermined driving force. Accordingly, required vehicle speed can be ensured without increasing the lift-up further, by reflecting an intention of the driver who does not wish to decrease the vehicle speed while controlling the lift-up.

According to the driving-force control device 1 of a two-wheeled automobile in the present embodiment, when a smaller one of the driver-requested driving force reflecting the opening degree of the accelerator and the predetermined driving force is the predetermined driving force, the control unit 3 decreases the driving force in a stepwise manner so that the driving force becomes the predetermined driving force. Generally, if the driving force of the rear wheel is abruptly decreased, a two-wheeled automobile abruptly decelerates and a driver has an uncomfortable feeling, and it becomes difficult to accelerate the two-wheeled automobile smoothly from the state of decelerating according to need. Therefore, by changing the driving force in a stepwise manner so that the driving force becomes the predetermined driving force, it can be suppressed that the driver has an uncomfortable feeling due to an abruptly change of the driving force.

According to the driving-force control device 1 of a two-wheeled automobile in the present embodiment, the control unit 3 calculates the predetermined driving force based on the speed of rotation of the rear wheel at a timing when lift-up is detected. Accordingly, the predetermined driving force can be acquired as an appropriate value at an appropriate timing and can be effectively used for driving force control.

In the present embodiment, an example in which the front-wheel lift-state judging unit 2 detects a lift-up state of a front wheel, and at this point of time, the control unit 3 calculates a predetermined driving force based on the rear wheel speed has been explained. However, the timing when the control unit 3 calculates the predetermined driving force based on the rear wheel speed can be before the point of time when the front-wheel lift-state judging unit 2 determinately detects the lift-up state of the front wheel. For example, a configuration of preliminarily detecting that the front wheel is in a state having a high possibility that lift-up of the front wheel occurs or in an occurrence initial state, before the front-wheel lift-state judging unit 2 conclusively detects a state in which the lift-up of the front wheel is determined can be adopted. In such a case, the control unit 3 can calculate the predetermined driving force based on the rear wheel speed at a timing of the preliminary detection before it is detected conclusively that the lift-up of the front wheel is in a determinate state.

In the present invention, the type, form, arrangement, number, and the like of the constituent members are not limited to those in the embodiment described above, but defined in the claims.

As described above, the present invention can provide a driving-force control device of a two-wheeled automobile that can appropriately suppress lift-up (wheelie) of the two-wheeled automobile, and can improve the acceleration performance by reducing the time required after the front lift has been canceled until the two-wheeled automobile is accelerated again, thereby enabling to improve the drivability of the two-wheeled automobile. Therefore, because of its general purposes and universal characteristics, applications of the present invention can be expected in a wide range in a driving-force control device of a vehicle and the like.

## Claims

1. A driving-force control device (1) of a two-wheeled automobile in which a rear wheel is a driving wheel and a front wheel is a driven wheel, the driving-force control device (1) comprising a control unit (3) that controls a driving force of the driving wheel so that lift-up of the front wheel of the two-wheeled automobile is suppressed,
wherein the control unit (3) controls the driving force so that the driving force becomes equal to or smaller than a predetermined value of the driving force calculated when the lift-up is detected, and
the predetermined value of the driving force is set to a larger value as speed of rotation of the rear wheel becomes higher.

2. The driving-force control device (1) of a two-wheeled automobile according to claim 1, wherein the control unit (3) executes control so that a smaller one of a requested driving force reflecting an opening degree of an accelerator and the predetermined value of the driving force becomes the driving force.

3. The driving-force control device (1) of a two-wheeled automobile according to claim 2, wherein when the smaller one is the predetermined value of the driving force, the control unit (3) decreases the predetermined driving force in a stepwise manner so that the driving force becomes the predetermined value of the driving force.

4. The driving-force control device (1) of a two-wheeled automobile according to any one of claims 1 to 3, wherein the control unit (3) calculates the predetermined value of the driving force based on the speed of rotation of the rear wheel at a timing when the lift-up is detected.

## Patentansprüche

1. Antriebskraft-Steuervorrichtung (1) eines zweirädrigen Kraftfahrzeugs, bei dem ein Hinterrad ein Antriebsrad und ein Vorderrad ein angetriebenes Rad ist, wobei die Antriebskraft-Steuervorrichtung (1) eine Steuereinheit (3) umfasst, die eine Antriebskraft des Antriebsrads so steuert, dass ein Anheben des Vorderrads des zweirädrigen Kraftfahrzeugs unterdrückt wird,
wobei die Steuereinheit (3) die Antriebskraft so steuert, dass die Antriebskraft gleich oder kleiner als ein vorbestimmter Wert der Antriebskraft wird, der berechnet wird, wenn das Anheben erfasst wird, und
der vorbestimmte Wert der Antriebskraft auf einen größeren Wert gesetzt wird, wenn die Drehgeschwindigkeit des Hinterrades höher wird.

2. Antriebskraft-Steuervorrichtung (1) eines zweirädrigen Kraftfahrzeugs gemäß Anspruch 1, wobei die Steuereinheit (3) die Steuerung so ausführt, dass eine kleinere einer angeforderten Antriebskraft, die einen Öffnungsgrad eines Beschleunigers widerspiegelt, und des vorbestimmten Werts der Antriebskraft, die Antriebskraft wird.

3. Antriebskraft-Steuervorrichtung (1) eines zweirädrigen Kraftfahrzeugs gemäß Anspruch 2, wobei die Steuereinheit (3), wenn der kleinere Wert der vorbestimmte Wert der Antriebskraft ist, die vorbestimmte Antriebskraft in einer schrittweisen Weise verringert, so dass die Antriebskraft der vorbestimmte Wert der Antriebskraft wird.

4. Antriebskraft-Steuervorrichtung (1) eines zweirädrigen Kraftfahrzeugs gemäß einem der Ansprüche 1 bis 3, wobei die Steuereinheit (3) den vorbestimmten Wert der Antriebskraft auf der Grundlage der Drehgeschwindigkeit des Hinterrads zu einem Zeitpunkt berechnet, zu dem das Anheben erfasst wird.

## Revendications

1. Dispositif de commande de force d'entraînement (1) d'un véhicule automobile à deux roues dans lesquelles une roue arrière est une roue d'entraînement et une roue avant est une roue entraînée, le dispositif de commande de force d'entraînement (1) comprenant une unité de commande (3) qui commande une force d'entraînement de la roue d'entraînement, de sorte que le soulèvement de la roue avant du véhicule automobile à deux roues soit supprimé,
dans lequel l'unité de commande (3) commande la force d'entraînement de sorte que la force d'entraînement devienne égale ou inférieure à une valeur prédéterminée de la force d'entraînement calculée lorsque le soulèvement est détecté, et
la valeur prédéterminée de la force d'entraînement est fixée à une valeur plus grande à mesure que la vitesse de rotation de la roue arrière devient plus élevée.

2. Dispositif de commande de force d'entraînement (1) d'un véhicule automobile à deux roues selon la revendication 1, dans lequel l'unité de commande (3) exécute la commande de sorte que la plus petite parmi une force d'entraînement requise reflétant un degré d'ouverture d'un accélérateur et la valeur prédéterminée de la force d'entraînement devienne la force d'entraînement.

3. Dispositif de commande de force d'entraînement (1) d'un véhicule automobile à deux roues selon la revendication 2, dans lequel, lorsque la plus petite est la valeur prédéterminée de la force d'entraînement, l'unité de commande (3) diminue la force d'entraînement prédéterminée de manière progressive, de sorte que la force d'entraînement devienne la valeur prédéterminée de la force d'entraînement.

4. Dispositif de commande de force d'entraînement (1) d'un véhicule automobile à deux roues selon l'une quelconque des revendications 1 à 3, dans lequel l'unité de commande (3) calcule la valeur prédéterminée de la force d'entraînement sur la base de la vitesse de rotation de la roue arrière à un moment où le soulèvement est détecté.
